# EUROPEAN PATENT SPECIFICATION

(11) **EP 3 450 038 B1**
(45) Date of publication and mention of the grant of the patent: **18.03.2020**
(21) Application number: 17196905.8
(22) Date of filing: 17.10.2017
(51) Int. Cl.: B21B 13/00

(54) **ROLLING STAND FOR A ROLLING MILL AND UNIVERSAL ROLLING MILL COMPRISING SAID ROLLING STAND**
WALZGERÜST FÜR EIN WALZWERK UND UNIVERSALWALZWERK MIT DIESEM WALZGERÜST
CAGE DE LAMINOIR POUR UN LAMINOIR ET LAMINOIR UNIVERSEL COMPRENANT LADITE CAGE DE LAMINOIR

(30) Priority: 05.09.2017 ES 201731025
(43) Date of publication of application: 06.03.2019
(73) Proprietor: Basque Titanium Alliance S.L., 20180 Oiartzun (ES)
(72) Inventor: KONDRATIEV, Andrii, 49000 DNIPRO (UA); KONDRATIEV, Oleksii, 49000 DNIPRO (UA)
(74) Representative: Igartua, Ismael

(56) References cited:
- EP-A2- 0 129 497
- WO-A1-03/057383
- DE-A1- 10 261 632
- GB-A- 2 137 911

## Description

### TECHNICAL FIELD

The present invention relates to rolling mills and to rolling stand for rolling mills.

### PRIOR ART

Conventional rolling mills are known in which a raw material, normally in form of a continuous bar, is passed through one or more pairs of rolls through various working stations to reduce its thickness and to make the desired uniform thickness.

A rolling mill in general is composed by a first part in which the raw material (billets) is fed, a central part with various stretching stands to reduced progressively the diameter of the raw material and a third part for the exit of the obtained product.

Conventional rolling mills can be configured for hot rolling or for cold rolling, said classification depending on the temperature of the raw material to be rolled. If the temperature of the raw material is above its recrystallization temperature, then the process is known as hot rolling. If the temperature of the raw material is below its recrystallization temperature, then the process is known as cold rolling.

In hot rolling the machine additionally comprises a furnace, usually in the first part, to heat up the raw material before being rolled.

Normally, there is one type of conventional rolling mills for producing solid bars or rods and another type of mills for producing tubes. In the rolling mill for producing tubes additionally there is a mandrel unit which form the inner surface of the tube.

However, there are also known universal rolling aggregates in which in the same machine are produce either solid bars or rods, or tubes.

In this sense, WO03057383 A1 discloses a universal rolling mill for producing rods, bars or seamless tubes from a hot solid metal round billet. In a first furnace the billets are heat up to the rolling temperature. Following the furnace, the universal rolling mill comprises a mandrel unit, where an internal hole is formed on the billet in case of tube's production, and some stretching stands located downstream. In case of producing rods (wires), after a cooling station another stretching step is carried out in a subsequent station. In the main stretching stand, there are a three roller configuration rolling stands which are used for producing both solid bars or rods, and tubes with the same configuration.

### DISCLOSURE OF THE INVENTION

The object of the invention is to provide a rolling stand for a rolling mill and a universal rolling mill comprising such a rolling stand as described in the claims.

The rolling stand for a rolling mill of the invention is able to produce solid rods or bars, or seamless tubes and it comprises a first operative configuration with three roller units oriented with respect to each other for producing solid rods or bars, and a second operative configuration with two roller units oriented with respect to each other for producing seamless tubes.

The rolling stand of the invention comprises two parts, a first part and a second part, the second part being detachable from the first part and each part comprising at least one of the roller units. The second part is configured to be coupled to the first part in a first position in which three roller units are oriented according to the first operative configuration, or in a second position in which two of said roller units are oriented according to the second operative configuration.

The universal rolling mill of the invention for producing both solid rods or bars, or seamless tubes comprises a rolling stand as described in the claims.

With the rolling stand of the invention it is possible to save costs since only one stand, i.e. only one tooling, is necessary to manufacture both solid rods or bars, and seamless tubes using the best suitable rolling configuration for its case. Namely, the rolling stand of the invention is able to change its operative configuration, from a three roller to two roller or vice-versa, in a simple way. Indeed, only one working station is necessary, the construction of the rolling mill therefore is simpler and requires less maintenance service.

These and other advantages and features of the invention will become evident in view of the drawings and detailed description of the invention.

### DESCRIPTION OF THE DRAWINGS

Figure 1 shows a plant view of a first embodiment of the universal rolling mill according to the invention.
Figure 2A shows a first front view of an embodiment of the rolling stand of the universal rolling mill of figure 1.
Figure 2B shows a first lateral view of the rolling stand of the universal rolling mill of figure 1.
Figure 3A shows a second front view of the rolling stand of the universal rolling mill of figure 1.
Figure 3B shows a second lateral view of the rolling stand of the universal rolling mill of figure 1.
Figure 4A shows a third front view of the rolling stand of the universal rolling mill of figure 1.
Figure 4B shows a fourth front view of the rolling stand of the universal rolling mill of figure 1.
Figure 5A shows a first embodiment of a roller unit and the allocation unit of the rolling stand of the invention.
Figure 5B shows a second embodiment of a roller unit and the allocation unit of the rolling stand of the invention.
Figure 6A shows a first view of the first operative configuration of the rolling stand of the universal rolling mill of figure 1.
Figure 6B shows a second view of the first operative configuration of the rolling stand of the universal rolling mill of figure 1.
Figure 6C shows a third view of the first operative configuration of the rolling stand of the universal rolling mill of figure 1.
Figure 7A shows a first view of the second operative configuration of the rolling stand of the universal rolling mill of figure 1.
Figure 7B shows a second view of the second operative configuration of the rolling stand of the universal rolling mill of figure 1.

### DETAILED DISCLOSURE OF THE INVENTION

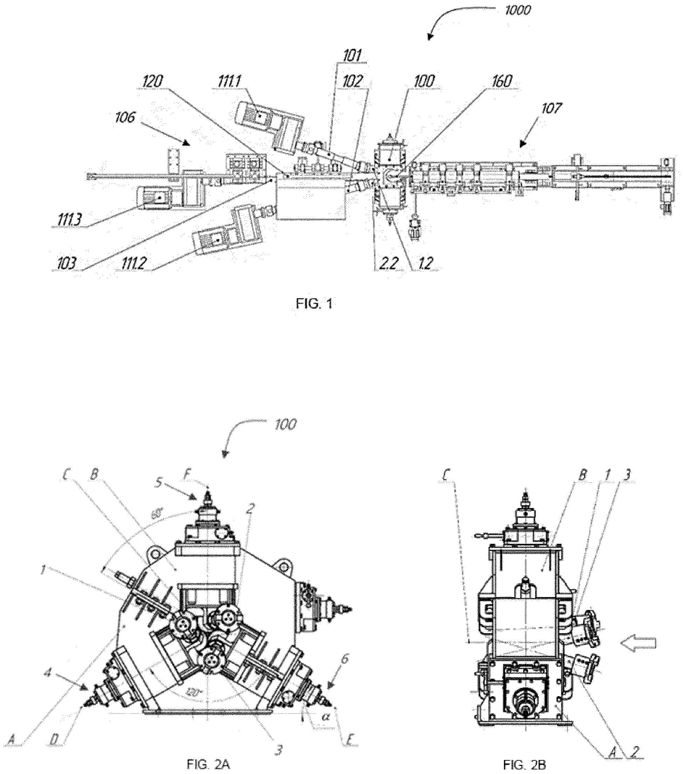

Figure 1 shows an embodiment of the universal rolling mill 1000 of the invention in which it is able to produce both solid rods or bars, or seamless tubes with a single rolling stand 100 in a working station.

The universal rolling mill 1000 of the preferred embodiment comprises an entry side 106 from which the row material (billet) 120, preferably in the form of solid bar, is fed and an exit side 107 from which the processed solid rods or bars, or seamless tubes are exit. The rolling stand 100 of the invention is disposed between the entry side 106 and the exit side 107.

The rolling stand 100 of the invention is configured to produce both solid rods or bars, or seamless tubes and it comprises a first operative configuration with three roller units 1, 2 and 3 oriented with respect to each other for producing solid rods or bars, and also comprises a second operative configuration with two roller units 1 and 2 oriented with respect to each other for producing seamless tubes.

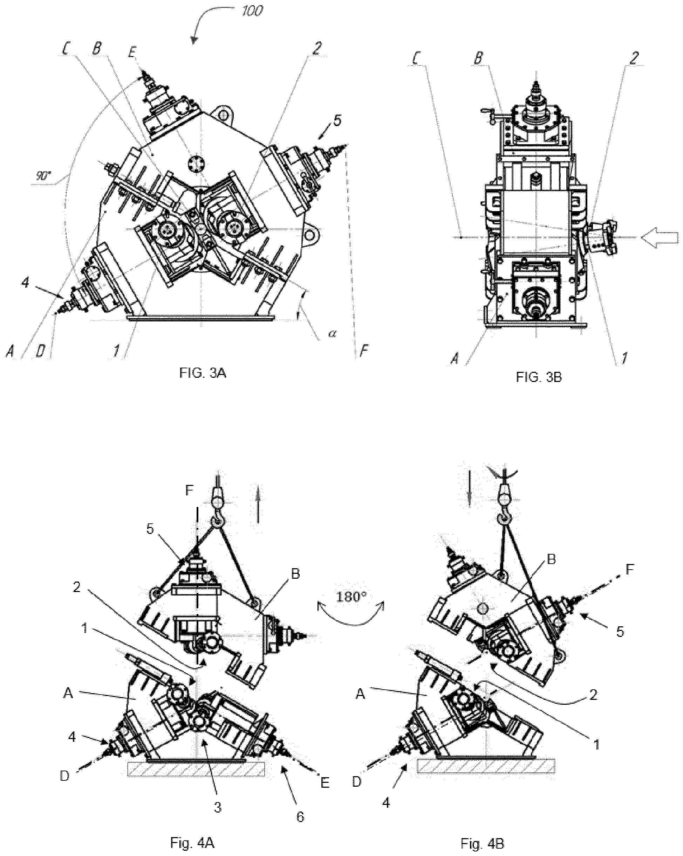

The rolling stand 100 comprises two parts according to the preferred embodiment of the invention, first part A and second part B, the second part B being detachable from the first part A as can be seen for example in figures 4A and 4B. Each part A and B comprises at least one of the roller units 1, 2 and 3.

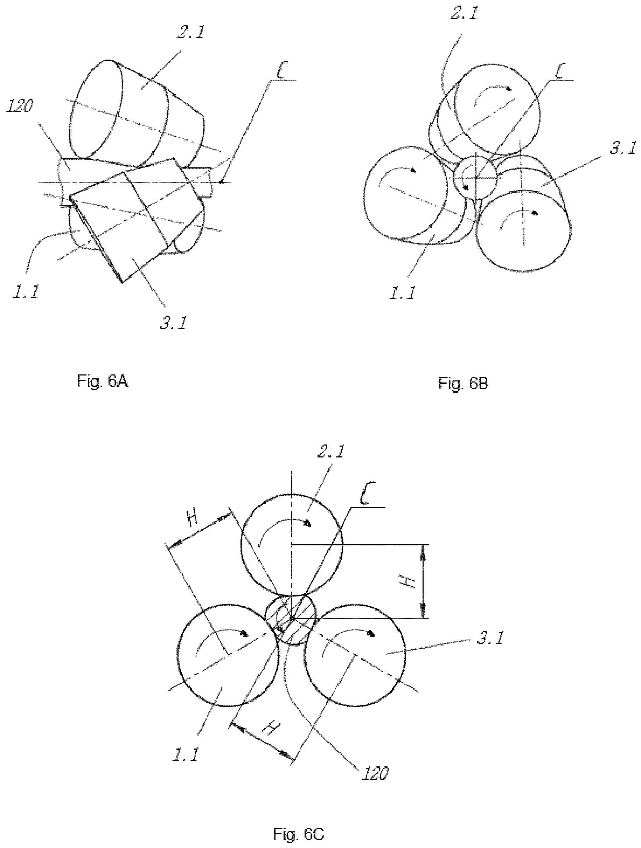

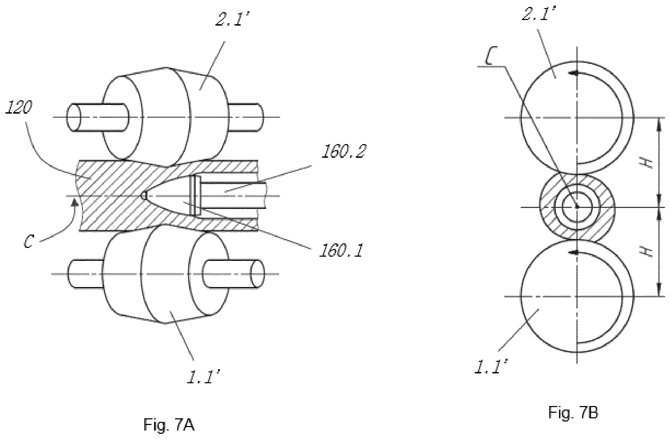

The second part B is configured to be coupled to the first part A in a first position (see for example figure 4A) in which three roller units 1, 2 and 3 are oriented according to the first operative configuration as can be seen in figures 2A, 6A, 6B or 6C, or in a second position (see for example figures 3A or 4B) in which two of said roller units 1 and 2 are oriented according to the second operative configuration as can be seen in figures 7A or 7B.

As shown in figure 4A, the first part A comprises two roller units 1 and 3 oriented with respect to each other for producing solid rods or bars, and the second part B comprises an additional roller unit 2 also oriented with respect to each other roller units 1 and 3, as will be explained later on, for producing solid rods or bars when the second part B is coupled to the first part A in the first position.

As stated above, the second part B is configured to be coupled to the first part A in the first position for producing solid rods or bars, but it is also configured to be coupled to the first part A in the second position in which the additional roller unit 2 is oriented with respect to one of the roller units 1 of the first part A for producing seamless tubes while the other roller unit 3 is removed from the first part A as can be seen in figure 3A or 4B. Therefore, according to the preferred embodiment of the invention roller unit 3 of the first part A of the rolling stand 100 is removable.

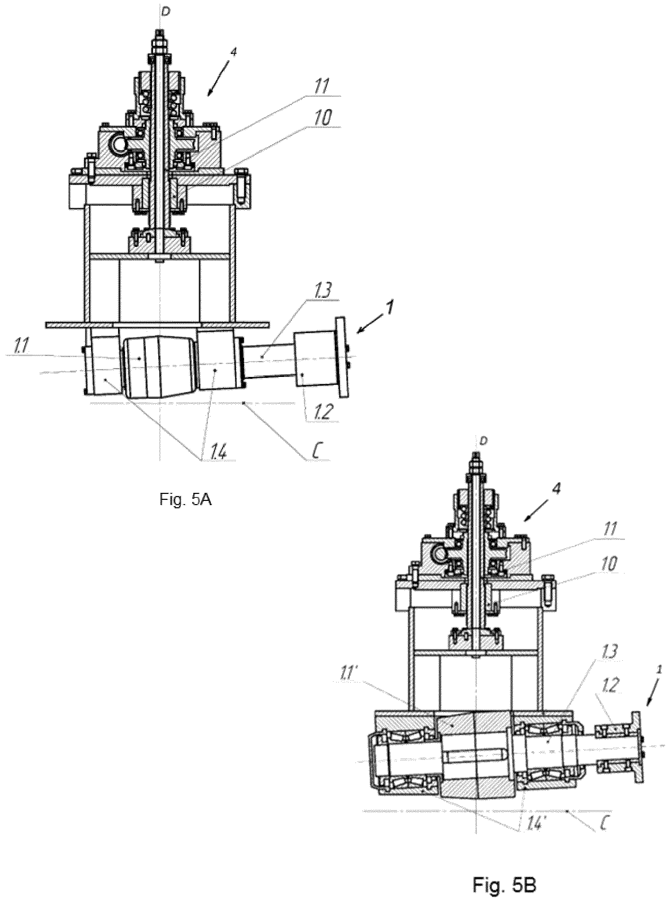

Each of the roller units 1, 2 and 3 comprises a roller 1.1, 2.1 and 3.1, as can be seen better in figures 6A or 6B, respectively and a coupling unit 1.2, 2.2 and 3.2 respectively. Figure 5A shows a schematic view of the roller unit 1 with a roller 1.1, the other roller units 2 and 3 having the same configuration as the roller unit 1.

As shown in figure 5A the roller unit 1 comprises a shaft 1.3 in which at one end is disposed the coupling unit 1.2 and at the opposite end is disposed the roller 1.1 thought the corresponding bearings 1.4. The roller unit 1 shown in this figure 5A comprises the roller 1.1 configured to manufacture solid rods or bars. However, in the roller unit 1 shown in figure 5B the roller 1.1', supported by the corresponding bearings 1.4', is configured to manufacture seamless tubes while the coupling unit 1.2 can be the same.

The rollers of the invention need to rotate to process the raw material 120, the universal rolling mill 1000 of the preferred embodiment therefore comprises a motion unit for each roller unit 1, 2 y 3 disposed at the entry side 106. Each motion unit comprises a driving shaft 101, 102 or 103 as can be seen in figure 1. The third motion unit will be only operative when the third roller unit 3 is operative, i.e. in the first operative configuration.

One end of each driving shaft 101, 102 and 103 is coupled to the coupling unit 1.2, 2.2 and 3.2 of the corresponding roller unit 1, 2 and 3 while the other end is coupled to an engine 111.1, 111.2 and 111.3 so that the needed motion is transmitted to the corresponding roller 1.1, 1.1', 2.1, 2.1', 3.1.

Each driving shaft 101, 102 and 103 makes that the corresponding roller unit 1, 2 and 3 rotates, therefore the roller 1.1, 1.1', 2.1, 2.1', 3.1 of the corresponding roller unit 1, 2 and 3 also rotates.

Each of the roller unit 1, 2 and 3 is disposed tilted in respect of a corresponding allocation axle D, E and F, see for example figure 5A for a roller unit 1 with a roller 1.1 for a solid rods or bars or figure 5B for a roller unit 1 with a roller 1.1' for seamless tubes, so that when then second part B is disposed in the first position the rollers 1.1, 2.1 and 3.1 configured to manufacture solid rods or bars are disposed in the space as shown in figures 6A, 6B and 6C with respect to a rolling axis C, and when the second part B is disposed in the second position the rollers 1.1' and 2.1' configured to manufacture seamless tubes are disposed in the space at shown in figures 7A and 7B with respect to the rolling axis C (the third roller unit 3 being removed from the rolling stand 100 in this position).

The rolling axis C is the axis of raw material 120 at its movement from entry side 106 to exit side 107 during rolling operation in rolling stand 100.

In the first operative configuration, in plane, perpendicular to rolling axis C, radial allocation axis D and E of roller units 1 and 3, are disposed at 120 degrees of each other as can be seen in figure 2A. In the same plane, perpendicular to rolling axis C, radial allocation axis F of roller unit 2 of the second part B of rolling stand 100 is also disposed at 120 degrees to each axis D and E.

In addition, all the rollers 1.1, 2.1 and 3.1 in the first operative configuration are disposed at the same distance H from the rolling axis C, better shown in figures 6A, 6B or 6C. Namely, the distance H from the rolling axis C to the center of the corresponding roller 1.1, 2.1 and 3.1 (in the same cutting plane) is the same for all rollers, as can be seen in figure 6C for example.

The first part A and the second part B are configured so that the second part B is rotated 180 degrees in respect to a vertical axis, as can be seen in figures 4A and 4B, to move from the first position to the second position and vice-versa as will be explained later on.

As it is depicted in figures 4A and 4B the coupling plane of the first part A and the second part B, i.e. the plane in which the second part B rests over the first part A, is tilted an angle α with respect to a horizontal plane. This configuration allows that roller units 1 and 2 are correctly arranged to each other when the second part B is rotated for producing seamless tubes in the second position and when the second part B is rotated again for producing solid rods or bars in the first position.

In the preferred embodiment of the invention the angle α is 30° which allows that the allocation axle F disposed at 120° in respect of the allocation axle D in the first position to be disposed at 180° when the second part B is rotated 180° in respect to the vertical axis to reach the second position and vice-versa, i.e. the angle between the roller allocation axle D, related to roller unit 1, and the roller allocation axle F, related to roller unit 2, changes from 120 degrees to 180 degrees as can be seen in figures 4A and 4B (the third roller unit 3 is removed from the first part A in this second position, figure 4B), or from 180 degrees to 120 degrees as can be seen in figures 4B and 4A (the third roller unit 3 is reassembled again in this first position, figure 4A).

Therefore, in the second operative configuration, i.e. when the second part B of the rolling stand 100 is in the second position, the allocation axles D and F of the roller units 1 and 2 are disposed at 180 degrees of each other, the third roller unit 3 being disabled in this position, which will correspond to allocation axle E, as can be seen in figure 3A.

In this second operative configuration also all the rollers 1.1' and 2.1' are disposed at the same distance H from the rolling axis C, i.e. the distance H from the rolling axis C to the center of the corresponding roller 1.1' or 2.1' (in the same cutting plane) is the same for all rollers, as can be seen in figure 7B.

The first part A and the second part B are attached together by fasteners, as screws (not shown in the drawings). To move the second part B from the first position to the second position or vice-versa, second part B has to be disengaged from the first part A and then with the aid of a crane, or a similar tool, the second part B is elevated and rotated 180 degrees in respect to the vertical axis as it is depicted in figures 4A and 4B, but first driving shafts 101, 102 and 103 have to be disengaged from the corresponding coupling units 1.2, 2.2 and 3.2.

In this position, i.e. when the second part B is separated from the first part A, the third roller unit 3 is removed from first part A.

If needed, rollers can also be changed in each of the roller units 1 and 2 since the requirements for producing solid rods or bars, and tubes are different. Rollers 1.1, 2.1 and 3.1 shown in figures 5A, 6A or 6B are rollers configured to manufacture solid rods or bars while rollers 1.1' and 2.1' shown in figures 5B, 7A or 7B are rollers configured to manufacture seamless tubes.

Once the corresponding roller units 1 and 2, and 3 if needed, are correctly assembled in the rolling stand 100 the second part B is rested over the first part A at the corresponding position and is attached again to said first part A. Finally, the corresponding driving shafts 101 and 102, and 103 if needed, are coupled to the respective coupling units 1.2 and 2.2, and 3.2 if needed, so that the motion needed is transmitted to the corresponding rollers.

The arrangement of the three rollers 1.1, 2.1 and 3.1 for the production of solid rods or bars in the first operative configuration, or the two rollers 1.1' and 2.1' for the production of seamless tubes in the second operative configuration, is such that a gap is created in the center to allow the pass of the raw material 120 to be processed as can be seen in figures 6B, 6C, 7A and 7B, being the central axis of this gap the rolling axis C.

This gap can be enlarged or reduced as it will be explained below to be able to produce solid rods or bars or seamless tubes of different sizes.

Each of the roller unit 1, 2 and 3 of the rolling stand 100 according to the preferred embodiment cooperates with a respective allocation unit 4, 5 and 6 as it is depicted in figures 2A, 3A, 4A or 4B, or in more detail in figures 5A and 5B. The allocating units 4, 5 and 6 are configured for approaching or moving the corresponding roller unit 1, 2 and 3 away from/to the rolling axis C.

In the preferred embodiment, the first part A comprises a respective allocating unit 4 and 6 for each roller unit 1 and 3 respectively, and the second part B comprises an allocation unit 5 for the roller unit 2.

Each allocating unit 4, 5 and 6 according to the preferred embodiment comprises a radial movement mechanism, i.e. a mechanism which moves in the direction of its corresponding allocation axle D, F and E. Each mechanism comprises a nut 10 fixed in the rolling stand 100 and a pressure adjustment screw 11 which rotates in said nut 10, as can be seen in figures 5A and 5B. One end of said pressure adjustment screw 11 cooperates with a corresponding roller unit 1, 2 and 3 for approaching said roller unit 1, 2 and 3 to the rolling axis C when the screw 11 is actuated in one direction, i.e. the gap formed by the corresponding rollers becomes smaller, or for moving said roller unit 1, 2, 3 away from the rolling axis C when the screw 11 is actuated in the opposite direction, i.e. the gap formed by the corresponding rollers becomes bigger.

The pressure adjustment screw 11 of each allocating unit 4, 5 and 6 comprises a corresponding rotation axis which coincides with the corresponding allocation axle D, F and E of each of the corresponding roller unit 1, 2 and 3.

The rotation axis of the pressure adjustment screws 11, i.e. the allocation axle D, F and E of the roller units 1, 2 and 3, of the first operative configuration for producing solid rods or bars are oriented with respect to each other at 120 degrees in vertical plane, as it is shown in figure 2A, and the rotation axis of the pressure adjustment screws 11, i.e. the allocation axle D and F of the roller units 1 and 2, of the second operative configuration for producing seamless tubes are oriented with respect to each other at 180 degrees in vertical plane, as it is shown in figure 3A.

To be able to produce seamless tubes, the universal rolling mill 1000 of the preferred embodiment further comprises a mandrel unit 160 located in the exit side 107. Said mandrel unit 160 is configured to be positioned in a working position in which it cooperates with the rolling stand 100 when the second part B is coupled to the first part A in the second position to produce seamless tubes, and in a non-working position when the second part B is coupled to the first part A in the first position to produce solid rods or bars.

In figure 7A is depicted how the mandrel unit 160, comprising a mandrel 160.1 and a mandrel bar 160.2, is located to produce seamless tubes.

When the mandrel unit 160 is not needed, i.e. when solid rods or bars are processing, said mandrel unit 160 is removed or being moved to the non-working position.

## Claims

1. Rolling stand for a rolling mill for producing solid rods or bars and seamless tubes, comprising a first operative configuration with three roller units (1, 2, 3) oriented with respect to each other for producing solids rods or bars, and it comprises a second operative configuration with two roller units (1, 2) oriented with respect to each other for producing seamless tubes, **characterized in that** the rolling stand comprises a first part (A) and a second part (B), the second part (B) being detachable from the first part (A), each part (A, B) comprising at least one of the roller units (1, 2, 3), the second part (B) being configured to be coupled to the first part (A) in a first position in which three roller units (1, 2, 3) are oriented according to the first operative configuration, or in a second position in which two of said roller units (1, 2) are oriented according to the second operative configuration.

2. Rolling stand according to claim 1, wherein the first part (A) comprises two roller units (1, 3) oriented with respect to each other for producing solid rods or bars, and the second part (B) comprises an roller unit (2), said roller unit (2) being oriented with respect to the other roller units (1, 3) for producing solid rods or bars when the second part (B) is coupled to the first part (A) in the first position, and said roller unit (2) being oriented with respect to one of the roller units (1) of the first part (A) for producing seamless tubes when the second part (B) is coupled to the first part (A) in the second position, the other roller unit (3) being removable from the first part (A).

3. Rolling stand according to claim 2, wherein the first part (A) and the second part (B) are configured so that the second part (B) is rotated 180 degrees in respect to a vertical axis to move from the first position to the second position and vice-versa.

4. Rolling stand according to claim 3, wherein the coupling plane of the first part (A) and the second part (B) is tilted an angle of 30 degrees with respect to a horizontal plane.

5. Rolling stand according to any of the preceding claims, comprising a respective allocating unit (4, 5, 6) for each roller unit (1, 2, 3), the allocating units (4, 5, 6) being configured for approaching or moving the corresponding roller unit (1, 2, 3) away from / to a rolling axis (C).

6. Rolling stand according to claim 5, wherein each allocating unit (4, 5, 6) comprises a radial movement mechanism comprising a nut fixed in the rolling stand (100) and a pressure adjustment screw which is movable on said nut, one end of said pressure adjustment screw cooperating with a corresponding roller unit (1, 2 ,3)for approaching said roller unit (1, 2 ,3) to the rolling axis (C) when the screw is actuated in one direction or for moving said roller unit (1, 2, 3) away from the rolling axis (C) when the screw is actuated in an opposite direction.

7. Rolling stand according to claim 6, wherein the pressure adjustment screw of each allocating unit (4,5,6) comprises a corresponding rotation axis (D, F, E), the rotation axis (D, F, E) of the roller units (1,2,3) of the first operative configuration for producing solids rods or bars being oriented with respect to each other at 120 degrees in vertical plane, and the rotation axis (D, F) of the roller units (1,2) of the second operative configuration for producing seamless tubes being oriented with respect to each other at 180 degrees in a vertical plane.

8. Universal rolling mill for producing solid rods or bars and seamless tubes, **characterized in that** it comprises a rolling stand (100) according to any of the preceding claims.

9. Universal rolling mill according to claim 8, wherein it further comprises a mandrel unit (160) being configured to be positioned in a working position in which it cooperates with the rolling stand (100) when the second part (B) is coupled to the first part (A) in the second position to produce seamless tubes, said mandrel unit (160) being also configured to be positioned in a non-working position when the second part (B) is coupled to the first part (A) in the first position.

## Patentansprüche

1. Walzgerüst für ein Walzwerk zur Herstellung von Vollstangen oder -stäben und nahtlosen Rohren, umfassend eine erste Betriebsanordnung mit drei aufeinander ausgerichteten Walzeneinheiten (1, 2, 3) zur Herstellung von Vollstangen oder -stäben und einer zweiten Betriebsanordnung mit zwei aufeinander ausgerichteten Walzeneinheiten (1, 2) zur Herstellung nahtloser Rohre, **dadurch gekennzeichnet, dass** das Walzgerüst einen ersten Teil (A) und einen zweiten Teil (B) umfasst, wobei der zweite Teil (B) vom ersten Teil (A) abnehmbar ist, wobei jeder Teil (A, B) mindestens eine der Walzeneinheiten (1, 2, 3) umfasst, wobei der zweite Teil (B) so ausgebildet ist, dass er in einer ersten Position, in der drei Walzeneinheiten (1, 2, 3) gemäß der ersten Betriebsanordnung ausgerichtet sind, oder in einer zweiten Position, in der zwei der genannten Walzeneinheiten (1, 2) gemäß der zweiten Betriebsanordnung ausgerichtet sind, mit dem ersten Teil (A) verbunden werden kann.

2. Walzgerüst nach Anspruch 1, wobei der erste Teil (A) zwei zur Herstellung von Vollstangen oder -stäben aufeinander ausgerichtete Walzeneinheiten (1, 3) umfasst und der zweite Teil (B) eine Walzeneinheit (2) umfasst, wobei die genannte Walzeneinheit (2) zur Herstellung von Vollstangen oder -stäben auf die anderen Walzeneinheiten (1,3) ausgerichtet ist, wenn der zweite Teil (B) in der ersten Position mit dem ersten Teil (A) verbunden ist, und die genannte Walzeneinheit (2) zur Herstellung von nahtlosen Rohren auf eine der Walzeneinheiten (1) des ersten Teils (A) ausgerichtet ist, wenn der zweite Teil (B) in der zweiten Position mit dem ersten Teil (A) verbunden ist, wobei die andere Walzeneinheit (3) vom ersten Teil (A) abnehmbar ist.

3. Walzgerüst nach Anspruch 2, wobei der erste Teil (A) und der zweite Teil (B) so ausgebildet sind, dass der zweite Teil (B) 180 Grad um eine vertikale Achse gedreht wird, um sich von der ersten Position in die zweite Position und umgekehrt zu bewegen.

4. Walzgerüst nach Anspruch 3, wobei die Verbindungsebene zwischen dem ersten Teil (A) und dem zweiten Teil (B) in einem 30°-Winkel relativ zu einer horizontalen Ebene geneigt ist.

5. Walzgerüst nach einem der vorstehenden Ansprüche, umfassend je eine Zuteilungseinheit (4, 5, 6) für jede Walzeneinheit (1, 2, 3), wobei die Zuteilungseinheiten (4, 5, 6) dazu ausgebildet sind, die entsprechende Walzeneinheit (1, 2, 3) auf eine Walzachse (C) zu- oder von dieser wegzubewegen.

6. Walzgerüst nach Anspruch 5, wobei jede Zuteilungseinheit (4, 5, 6) einen Radialbewegungsmechanismus mit einer im Walzgerüst (100) befestigten Mutter und einer auf der genannten Mutter beweglichen Druckeinstellschraube aufweist, wobei ein Ende der genannten Druckeinstellschraube mit einer entsprechenden Walzeneinheit (1, 2, 3) zusammenwirkt, um die genannte Walzeneinheit (1, 2, 3) auf die Walzachse (C) zuzubewegen, wenn die Schraube in einer Richtung betätigt wird, oder um die genannte Walzeneinheit (1, 2, 3) von der Walzachse (C) wegzubewegen, wenn die Schraube in die entgegengesetzte Richtung betätigt wird.

7. Walzgerüst nach Anspruch 6, wobei die Druckeinstellschraube jeder Zuteilungseinheit (4, 5, 6) eine entsprechende Drehachse (D, F, E) aufweist, wobei die Drehachsen (D, F, E) der Walzeneinheiten (1, 2, 3) der ersten Betriebsanordnung zur Herstellung von Vollstangen oder -stäben mit einem Winkel von 120 Grad in einer vertikalen Ebene aufeinander ausgerichtet sind und die Drehachsen (D, F) der Walzeneinheiten (1, 2) der zweiten Betriebsanordnung zur Herstellung von nahtlosen Rohren mit einem Winkel von 180 Grad in einer vertikalen Ebene aufeinander ausgerichtet sind.

8. Universalwalzwerk zur Herstellung von Vollstangen oder-Stäben und nahtlosen Rohren, **dadurch gekennzeichnet, dass** es ein Walzgerüst (100) nach einem der vorstehenden Ansprüche umfasst.

9. Universalwalzwerk nach Anspruch 8, welches ferner eine Dorneinheit (160) umfasst, die so ausgebildet ist, dass sie in einer Arbeitsposition positioniert werden kann, in der sie mit dem Walzgerüst (100) zusammenwirkt, wenn der zweite Teil (B) mit dem ersten Teil (A) in der zweiten Position zur Herstellung nahtloser Rohre verbunden ist, wobei die Dorneinheit (160) auch so ausgebildet ist, dass sie in einer nicht-arbeitenden Position positioniert werden kann, wenn der zweite Teil (B) mit dem ersten Teil (A) in der ersten Position verbunden ist.

## Revendications

1. Cage de laminoir pour un laminoir pour la production de barres ou de tiges pleines et de tubes sans soudure, comprenant une première configuration de fonctionnement avec trois unités de rouleaux (1, 2, 3) orientées les unes par rapport aux autres pour la production de barres ou de tiges pleines, et elle comprend une seconde configuration de fonctionnement avec deux unités de rouleaux (1, 2) orientées l'une par rapport à l'autre pour la production de tubes sans soudure, **caractérisée en ce que** la cage de laminoir comprend une première partie (A) et une seconde partie (B), la seconde partie (B) étant détachable de la première partie (A), chaque partie (A, B) comprenant au moins une des unités de rouleaux (1, 2, 3), la seconde partie (B) étant configurée pour être couplée à la première partie (A) dans une première position dans laquelle trois unités de rouleaux (1, 2, 3) sont orientées selon la première configuration de fonctionnement, ou dans une seconde position dans laquelle deux desdites unités de rouleaux (1, 2) sont orientées selon la seconde configuration de fonctionnement.

2. Cage de laminoir selon la revendication 1, dans laquelle la première partie (A) comprend deux unités de rouleaux (1, 3) orientées l'une par rapport à l'autre pour la production de barres ou de tiges plaines, et la seconde partie (B) comprend une unité de rouleau (2), ladite unité de rouleau (2) étant orientée par rapport aux autres unités de rouleaux (1, 3) pour la production de barres ou de tiges pleines lorsque la seconde partie (B) est couplée à la première partie (A) dans la première position, et ladite unité de rouleau (2) étant orientée par rapport à l'une des unités de rouleau (1) de la première partie (A) pour la production de tubes sans soudure lorsque la seconde partie (B) est couplée à la première partie (A) dans la seconde position, l'autre unité de rouleau (3) étant amovible de la première partie (A).

3. Cage de laminoir selon la revendication 2, dans laquelle la première partie (A) et la seconde partie (B) sont configurées de telle sorte que la seconde partie (B) est tournée 180 degrés par rapport à un axe vertical pour se déplacer de la première position à la seconde position et vice-versa.

4. Cage de laminoir selon la revendication 3, dans laquelle le plan d'accouplement de la première partie (A) et de la seconde partie (B) est incliné d'un angle de 30 degrés par rapport à un plan horizontal.

5. Cage de laminoir selon l'une quelconque des revendications précédentes, comprenant une unité d'affectation respective (4, 5, 6) pour chaque unité de rouleau (1, 2, 3), les unités d'affectation (4, 5, 6) étant configurées pour approcher ou éloigner l'unité de rouleau correspondante (1, 2, 3) de un axe de laminage (C).

6. Cage de laminoir selon la revendication 5, dans laquelle chaque unité d'affectation (4, 5, 6) comprend un mécanisme de mouvement radial comprenant un écrou fixé dans la cage de laminoir (100) et une vis de réglage de pression qui est mobile sur ledit écrou, une extrémité de ladite vis de réglage de pression coopérant avec une unité de rouleau correspondante (1, 2, 3) pour approcher ladite unité de rouleau (1, 2, 3) de l'axe de laminage (C) lorsque la vis est actionnée dans une direction ou pour éloigner ladite unité de rouleau (1, 2, 3) de l'axe de laminage (C) lorsque la vis est actionnée dans une direction opposée.

7. Cage de laminoir selon la revendication 6, dans laquelle la vis de réglage de pression de chaque unité d'affectation (4, 5, 6) comprend un axe de rotation correspondant (D, F, E), l'axe de rotation (D, F, E) des unités de rouleaux (1, 2, 3) de la première configuration de fonctionnement pour la production de barres ou de tiges pleines étant orientés les uns par rapport aux autres à 120 degrés dans un plan vertical, et l'axe de rotation (D, F) des unités de rouleaux (1, 2) de la seconde configuration de fonctionnement pour la production de tubes sans soudure étant orientés l'un par rapport à l'autre à 180 degrés dans un plan vertical.

8. Laminoir universel pour la production de barres ou de tiges pleines et de tubes sans soudure, **caractérisé en ce qu'**il comprend une cage de laminoir (100) selon l'une quelconque des revendications précédentes.

9. Laminoir universel selon la revendication 8, dans lequel il comprend en outre une unité de mandrin (160) configurée pour être positionnée dans une position de travail dans laquelle elle coopère avec la cage de laminoir (100) lorsque la seconde partie (B) est couplée à la première partie (A) dans la seconde position pour la production de tubes sans soudure, ladite unité de mandrin (160) étant également configurée pour être positionnée dans une position non de travail lorsque la deuxième partie (B) est couplée à la première partie (A) dans la première position.
